# EUROPEAN PATENT APPLICATION

(11) **EP 4 737 232 A1**
(43) Date of publication of application: **06.05.2026**
(21) Application number: 25205951.4
(22) Date of filing: 01.10.2025
(51) Int. Cl.: B60T 13/14, B60T 13/66, B60T 13/68, B66F 9/22

(54) **HYDRAULIC BRAKE SYSTEM FOR INDUSTRIAL VEHICLE**

(30) Priority: 05.11.2024 JP 2024193803
(71) Applicant: KABUSHIKI KAISHA TOYOTA JIDOSHOKKI, Kariya-shi, Aichi 448-8671 (JP)
(72) Inventor: MASUDA, Hideo, Kariya-shi, 448-8671 (JP)
(74) Representative: TBK

(57) **Abstract**

A hydraulic brake system (10) for an industrial vehicle includes a master cylinder (12) having a brake pedal, a brake device (13), and a master cylinder fluid passage. The hydraulic brake system (10) includes a hydraulic fluid tank (12), a control valve (14, 141), an actuator (15), an actuator fluid passage, a fluid return passage, a first solenoid valve (34), a second solenoid, a third solenoid valve (75), and a controller (28). When braking is performed by the master cylinder (12), the controller controls the first solenoid valve (34) to open the master cylinder fluid passage, and the second solenoid valve (36) to close the actuator fluid passage. When braking is performed by the actuator (15), the controller (28) controls the second solenoid valve (36) to open the master cylinder fluid passage, and the second solenoid valve (36) to close the actuator fluid passage, and when the hydraulic pressure of the brake device (13) is released, the controller (28) controls the third solenoid valve (75) to open the fluid return passage.

## Description

### BACKGROUND ART

The present invention relates to a hydraulic brake system for an industrial vehicle.

As a conventional technique relating to a hydraulic brake system for an industrial vehicle, for example, a brake fluid pressure control device disclosed in Japanese Patent Application Publication No. 2000-085560 has been known. The brake fluid pressure control device disclosed in the Publication includes a control piston that receives fluid pressure generated by a master cylinder, and a control valve that controls fluid pressure of a fluid pressure source with respect to the fluid pressure acting on the control piston, and a brake device that operates with the fluid pressure controlled by the control valve.

The hydraulic brake system as disclosed in the Publication is known. In order to enable automated operation without an operator in an industrial vehicle configured to be capable of manual operation, it is necessary to provide a means for automatedly generating braking force in a brake device that is configured to generate braking force through brake pedal operation. That is, in an industrial vehicle configured to switch between the manual operation and the automated operation, it is necessary to implement a hydraulic brake system that can apply braking force to the brake device both by operating the brake pedal operation and by automatedly controlling an actuator. In this case, for example, it is considered that the actuator, which is an automatedly controlled, is configured to press the brake pedal during automated operation, but the actuator would interfere with brake pedal operation during the manual operation. In addition, it is difficult to adjust the braking force of the brake device when the actuator operates the brake pedal.

The present invention, which has been made in view of the above problems, is directed to providing a hydraulic brake system for an industrial vehicle that can properly operate a brake device even if operation of the industrial vehicle is switched between manual operation and automated operation. The present invention is also directed to providing the hydraulic brake system for the industrial vehicle that achieves both improvement in responsiveness of the brake device and downsizing of a control valve.

### SUMMARY

In accordance with an aspect of the present invention, there is provided a hydraulic brake system for an industrial vehicle. The hydraulic brake system include a master cylinder having a brake pedal, and configured to discharge hydraulic fluid in accordance with a depressed amount of the brake pedal; a brake device configured to brake a wheel using hydraulic pressure; and a master cylinder fluid passage connecting the master cylinder and the brake device. The hydraulic brake system includes: a hydraulic fluid tank in which the hydraulic fluid is stored; a control valve disposed in the master cylinder fluid passage; an actuator that outputs hydraulic pressure; an actuator fluid passage that extends from the actuator to the master cylinder fluid passage through the control valve; a fluid return passage allowing the hydraulic fluid to return from the brake device to the hydraulic fluid tank; a first solenoid valve provided in the control valve and configured to open and close the master cylinder fluid passage; a second solenoid valve provided in the control valve, and configured to open and close the actuator fluid passage; a third solenoid valve configured to open and close the fluid return passage; and a controller configured to control the first solenoid valve, the second solenoid valve, and the third solenoid valve. The hydraulic fluid tank is connected to the master cylinder fluid passage and the actuator fluid passage. When braking is performed by the master cylinder, the controller controls the first solenoid valve to open the master cylinder fluid passage, and the second solenoid valve to close the actuator fluid passage. When braking is performed by the actuator, the controller controls the second solenoid valve to open the master cylinder fluid passage, and the second solenoid valve to close the actuator fluid passage. When the hydraulic pressure of the brake device is released, the controller controls the third solenoid valve to open the fluid return passage.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic configuration view of a hydraulic brake system for a forklift truck according to an embodiment of the present invention;
FIG. 2A is a schematic view of a first solenoid valve, and FIG. 2B is a schematic view of a second solenoid valve;
FIG. 3A is a schematic view of a third solenoid valve, and FIG. 3B is a schematic view of a fourth solenoid valve;
FIG. 4 is a schematic configuration view of the hydraulic brake system, illustrating a state in which a braking force is generated by a master cylinder;
FIG. 5 is a schematic configuration view of the hydraulic brake system, illustrating a state in which the braking force by the master cylinder is released;
FIG. 6 is a schematic configuration view of the hydraulic brake system, illustrating a state in which a braking force is generated by an actuator;
FIG. 7 is a schematic configuration view of the hydraulic brake system, illustrating a state in which the braking force by the actuator is released;
FIG. 8 is a schematic configuration view of the hydraulic brake system, illustrating a state in which hydraulic pressure (braking pressure) of a brake device is released when power fails;
FIG. 9 is a schematic configuration view of a control valve according to a modification; and

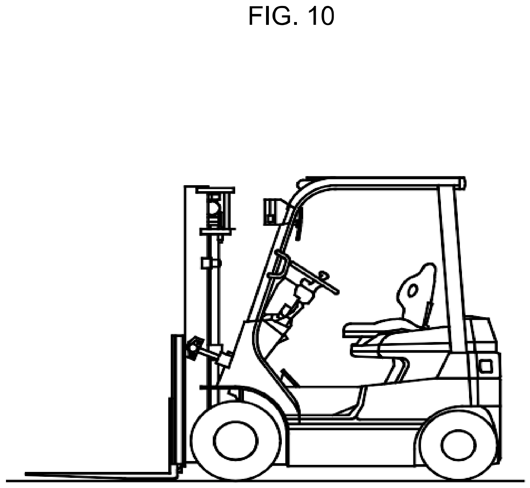

FIG. 10 is a schematic view of a forklift truck.

### DETAILED DESCRIPTION OF THE EMBODIMENTS

### Embodiment

The following will describe a hydraulic brake system for an industrial vehicle according to an embodiment with reference to the accompanying drawings. The industrial vehicle of the present embodiment is a forklift truck, and the hydraulic brake system for the forklift truck will be described.

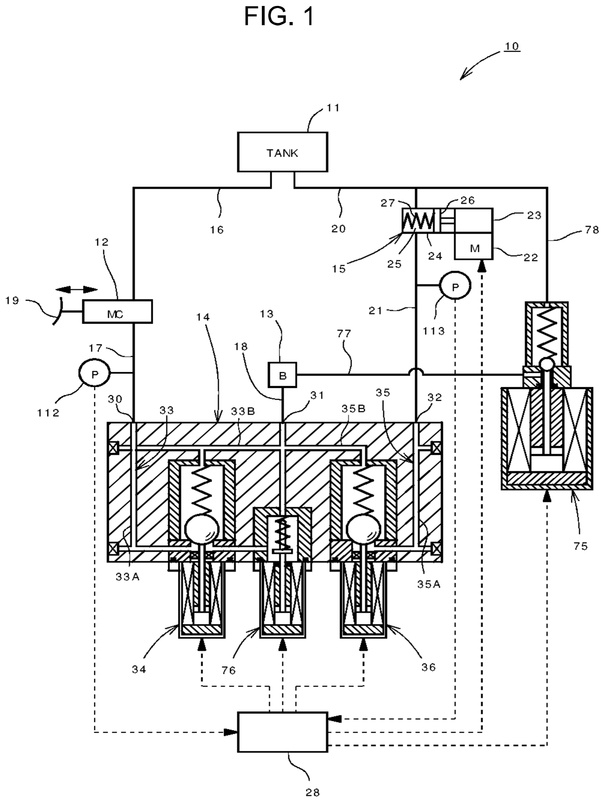

As illustrated in FIG. 1, a hydraulic brake system 10 of a forklift truck (hereinafter, referred to as "hydraulic brake system") includes a hydraulic fluid tank 11, a master cylinder 12, a brake device 13, a control valve 14, and an actuator 15. The hydraulic fluid tank 11 is a tank in which hydraulic fluid is stored. The master cylinder 12 is connected to the hydraulic fluid tank 11 by a pipe 16 and also to the control valve 14 by a pipe 17. The control valve 14 is connected to the brake device 13 by a pipe 18.

The master cylinder 12 includes a brake pedal 19 and is configured to output hydraulic pressure in accordance with a depressed amount of the brake pedal 19. When the forklift truck is operated manually (manual operation), the master cylinder 12 outputs hydraulic pressure to the brake device 13 via the control valve 14 in response to the operation of the brake pedal 19 by an operator, thereby generating braking force in the brake device 13.

In the brake device 13, the braking force that stops rotation of wheels (not illustrated) of the forklift truck depending on the hydraulic pressure output by the master cylinder 12 or the actuator 15 is generated. The brake device 13 of the forklift truck is, for example, a wet brake provided on a front axle of a vehicle body, but may also be a drum brake or a disc brake.

The actuator 15 is connected to the hydraulic fluid tank 11 by a pipe 20 and also to the control valve 14 by a pipe 21. The actuator 15 mechanically outputs hydraulic fluid to generate hydraulic pressure. The actuator 15 of the present embodiment is an electric hydraulic cylinder, and includes an electric motor 22, a conversion mechanism 23 that converts the rotation of the electric motor 22 into linear motion, a cylinder 24 provided with a fluid chamber 25, and a piston 26 reciprocally movable inside the cylinder 24. The fluid chamber 25 accommodates a coil spring 27 as an urging member that returns the piston 26 to its original position. In the actuator 15, when the piston 26 is driven forward by the electric motor 22, the hydraulic fluid in the fluid chamber 25 is pressurized, thereby discharging the hydraulic fluid. The electric motor 22 is electrically connected to and controlled by a controller 28. Although not illustrated, the controller 28 includes a central processing unit (CPU) that performs various processing operations and a memory unit that stores programs and data, controls various components of the forklift truck, and receives signals from various sensors.

The control valve 14 has a master cylinder port 30 to which the pipe 17 is connected, a brake port 31 to which the pipe 18 is connected, and an actuator port 32 to which the pipe 21 is connected. The master cylinder port 30 , the brake port 31, and the actuator port 32 are all formed in an upper portion of the control valve 14. The master cylinder port 30, the brake port 31, and the actuator port 32 are formed in the upper portion of the control valve 14 in order to facilitate removal of air (air bubbles) contained in the hydraulic fluid.

The control valve 14 has a first passage 33 that connects the master cylinder port 30 and the brake port 31. A first solenoid valve 34 for opening and closing the first passage 33 is disposed in the first passage 33. The first passage 33 has a passage portion 33A that provides fluid communication between the master cylinder port 30 and the first solenoid valve 34, and a passage portion 33B that provides fluid communication between the first solenoid valve 34 and the brake port 31.

The control valve 14 has a second passage 35 that provide fluid communication between the actuator port 32 and the first passage 33. A second solenoid valve 36 for opening and closing the second passage 35 is disposed in the second passage 35. The second passage 35 is connected to the passage portion 33B of the first passage 33. The second passage 35 has a passage portion 35A that provides fluid communication between the actuator port 32 and the second solenoid valve 36, and a passage portion 35B that provides fluid communication between the second solenoid valve 36 and the passage portion 33B. The first solenoid valve 34 and the second solenoid valve 36 are controlled by the controller 28.

In the hydraulic brake system 10 of the present embodiment, the pipe 17, the first passage 33, and the pipe 18 cooperate to form a master cylinder fluid passage that connects the master cylinder 12 and the brake device 13. In addition, in the hydraulic brake system 10, the pipe 21 and the second passage 35 cooperate to form an actuator fluid passage that extends from the actuator 15 to the master cylinder fluid passage through the control valve 14.

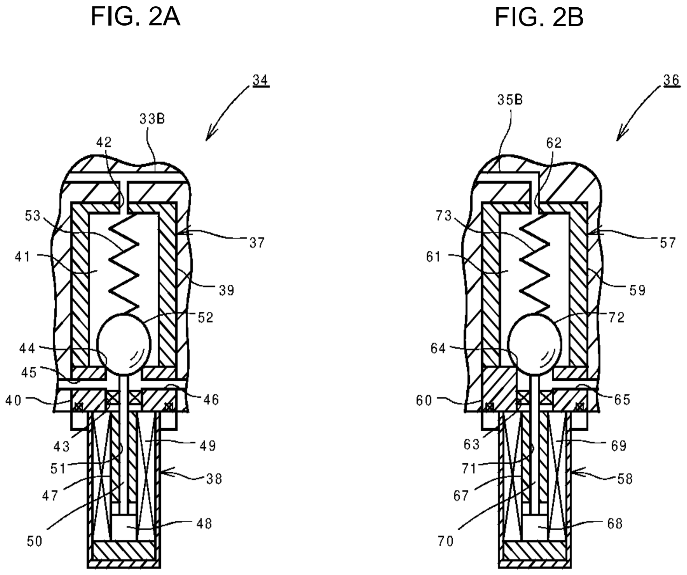

The first solenoid valve 34 is a normally closed solenoid valve that always closes the first passage 33 when not energized and opens the first passage 33 when energized. As illustrated in FIG. 2A, the first solenoid valve 34 includes a valve portion 37 embedded in a lower portion of the control valve 14, and a solenoid portion 38 connected to the valve portion 37 and protruding from the lower portion of the control valve 14. The valve portion 37 includes a valve housing 39 having a tubular shape, and a valve body 40. The valve housing 39 and the valve body 40 form a valve chamber 41. A communication hole 42 that is in communication with the passage portion 33B of the first passage 33 is formed in an upper portion of the valve housing 39.

A through hole 43 is formed in the center of the valve body 40 so as to be in communication with the valve chamber 41. A valve hole 44, corresponding to a first valve hole, is formed on the valve chamber 41 side of the through hole 43. An inner diameter of a surface forming the valve hole 44 increases from the through hole 43 toward an opening. The valve body 40 has a communication hole 45 that provides fluid communication between the through hole 43 and the passage portion 33A. The valve chamber 41, the through hole 43, the valve hole 44, and the communication hole 45 form a part of the first passage 33. In addition, the valve body 40 has a communication hole 46 at a position different from the communication hole 45, extending from the through hole 43 to an outer periphery of the valve body 40.

The solenoid portion 38 includes a fixed iron core 47, a movable iron core 48, and an electromagnetic coil 49. A rod insertion hole 51 through which a rod 50 is inserted is formed in the center of the fixed iron core 47. One (lower) end of the rod 50 is connected to the movable iron core 48. The movable iron core 48 is movable in an axial direction of the rod 50. The electromagnetic coil 49 surrounds the fixed iron core 47 and the movable iron core 48. When the electromagnetic coil 49 is energized, the movable iron core 48 approaches the fixed iron core 47, thereby moving the rod 50 upward. A valve element 52 corresponding to a first valve element is provided on the other (upper) end of the rod 50. The valve element 52 has a spherical shape, and is capable of closing the valve hole 44. It is noted that the valve element 52 is not limited to a valve element having a spherical shape, but may be a valve element having a conical shape. In the valve chamber 41, a coil spring 53 corresponding to an urging member is interposed between the valve housing 39 and the valve element 52. The coil spring 53 applies an urging force (spring force) to the valve element 52 in a direction that urges the valve element 52 to close the valve hole 44. The spring force exerted by the coil spring 53 is calculated as the product of the spring constant of the coil spring 53 and the displacement from its natural length.

The second solenoid valve 36 is a normally closed solenoid valve that always closes the second passage 35 when not energized, and opens the second passage 35 when energized. As illustrated in FIG. 2B, the second solenoid valve 36 includes a valve portion 57 embedded in the lower portion of the control valve 14, and a solenoid portion 58 connected to the valve portion 57 and protruding from the lower portion of the control valve 14. The valve portion 57 includes a valve housing 59 having a tubular shape, and a valve body 60. The valve housing 59 and the valve body 60 form a valve chamber 61. A communication hole 62 that is in communication with the passage portion 35B of the second passage 35 is formed in an upper portion of the valve housing 59.

A through hole 63 is formed in the center of the valve body 60 so as to be in communication with the valve chamber 61. A valve hole 64, corresponding to a second valve hole, is formed on the valve chamber 61 side of the through hole 63. An inner diameter of a surface forming the valve hole 64 increases from the through hole 63 toward an opening. The valve body 60 has a communication hole 65 that provides fluid communication between the through hole 63 and the passage portion 35A. The valve chamber 61, the through hole 63, the valve hole 64, and the communication hole 65 form a part of the second passage 35.

The solenoid portion 58 includes a fixed iron core 67, a movable iron core 68, and an electromagnetic coil 69. A rod insertion hole 71 through which a rod 70 is inserted is formed in the center of the fixed iron core 67. One (lower) end of the rod 70 is connected to the movable iron core 68. The movable iron core 68 is movable in an axial direction of the rod 70. The electromagnetic coil 69 surrounds the fixed iron core 67 and the movable iron core 68. When the electromagnetic coil 69 is energized, the movable iron core 68 approaches the fixed iron core 67, thereby moving the rod 70 upward. A valve element 72 corresponding to a second valve element is provided on the other (upper) end of the rod 70. The valve element 72 has a spherical shape, and is capable of closing the valve hole 64. It is noted that the valve element 72 is not limited to a valve element having a spherical shape, but may be a valve element having a conical shape. In the valve chamber 61, a coil spring 73 corresponding to an urging member is interposed between the valve housing 59 and the valve element 72. The coil spring 73 applies an urging force (spring force) to the valve element 72 in a direction that urges the valve element 72 to close the valve hole 64. The spring force exerted by the coil spring 73 is calculated as the product of the spring constant of the coil spring 73 and the displacement from its natural length.

The hydraulic brake system 10 of the present embodiment includes a third solenoid valve 75, and a fourth solenoid valve 76, in addition to the first solenoid valve 34 and the second solenoid valve 36. In addition, the hydraulic brake system 10 has a fluid return passage for returning hydraulic fluid from the brake device 13 to the hydraulic fluid tank 11. The fluid return passage includes a pipe 77 that connects the brake device 13 and the third solenoid valve 75, and a pipe 78 that connects the third solenoid valve 75 and the pipe 20 (see FIG. 1).

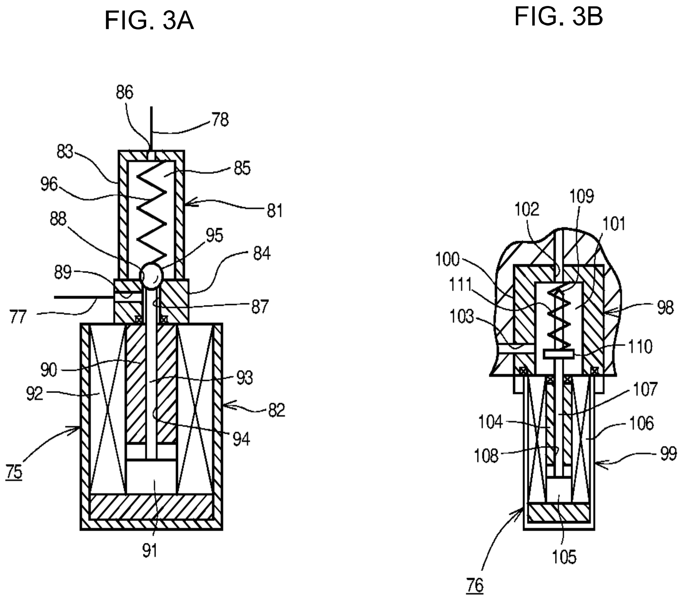

The third solenoid valve 75 is a normally closed solenoid valve that opens the fluid return passage when energized and always closes the fluid return passage when not energized. The third solenoid valve 75 is provided independently of the control valve 14 (see FIG. 1). As illustrated in FIG. 3A, the third solenoid valve 75 includes a valve portion 81 and a solenoid portion 82 connected to the valve portion 81. The valve portion 81 includes a valve housing 83 having a tubular shape, and a valve body 84. The valve housing 83 and the valve body 84 form a valve chamber 85. A communication hole 86 that is in communication with the pipe 78 of the fluid return passage is formed in an upper portion of the valve housing 83.

A through hole 87 is formed in the center of the valve body 84 so as to be in communication with the valve chamber 85. A valve hole 88, corresponding to a third valve hole, is formed on the valve chamber 85 side of the through hole 87. An inner diameter of a surface forming the valve hole 88 increases from the through hole 87 toward an opening. A diameter of the valve hole 88 of the third solenoid valve 75 is set smaller than those of the valve hole 44 of the first solenoid valve 34 and the valve hole 64 of the second solenoid valve 36. Specifically, the diameter of the valve hole 88 is set to about one third of those of the valve holes 44, 64, but only needs to be set within a range from two thirds to one ninetieth of those of the valve holes 44, 64. That is, the diameter of each of the valve holes 44, 64 is approximately 3 times the diameter of the valve hole 88, but only needs to be within the range from 1.5 to 90 times the diameter of the valve hole 88. The diameter of each of the valve holes 44, 64 is preferably 3 to 15 times the diameter of the valve hole 88. The valve body 84 has a communication hole 89 that provides fluid communication between the through hole 87 and the pipe 77. The valve chamber 85, the through hole 87, the valve hole 88, and the communication hole 89 form a part of the fluid return passage.

The solenoid portion 82 includes a fixed iron core 90, a movable iron core 91, and an electromagnetic coil 92. A rod insertion hole 94 through which a rod 93 is inserted is formed in the center of the fixed iron core 90. One (lower) end of the rod 93 is connected to the movable iron core 91. The movable iron core 91 is movable in an axial direction of the rod 93. The electromagnetic coil 92 surrounds the fixed iron core 90 and the movable iron core 91. When the electromagnetic coil 92 is energized, the movable iron core 91 approaches the fixed iron core 90, thereby moving the rod 93 upward. A valve element 95 corresponding to a third valve element is provided on the other (upper) end of the rod 93. The valve element 95 is capable of closing the valve hole 88. The valve element 95 is a valve element having a spherical shape. It is noted that the valve element 95 is not limited to a valve element having a spherical shape, but may be a valve element having a conical shape. The valve chamber 85 accommodates a coil spring 96 as an urging member that applies an urging force (spring force) to the valve element 95. The coil spring 96 applies an urging force (spring force) to the valve element 95 in a direction that urges the valve element 95 to close the valve hole 88. The spring force exerted by the coil spring 96 is calculated as the product of the spring constant of the coil spring 96 and the displacement from its natural length.

Since the hydraulic brake system 10 includes the third solenoid valve 75, even if the diameter of the valve hole 44 of the first solenoid valve 34 is increased, a valve opening pressure required to open the first solenoid valve 34 can be reduced. The valve opening pressure required to open the first solenoid valve 34 while no hydraulic pressure for braking is generated in the brake device 13 is calculated by dividing the spring force of the coil spring 53 by an area of the valve hole 44. The valve opening pressure required to open the first solenoid valve 34 when fluid pressure for braking is generated in the brake device 13 is obtained by adding the hydraulic pressure, which is calculated by dividing the spring force of the coil spring 53 by the area of the valve hole 44, to the hydraulic pressure of the brake device 13. The third solenoid valve 75 opens the fluid return passage to release the braking pressure of the brake device 13, thereby allowing the hydraulic pressure acting on the valve element 52 to be reduced. As a result, reducing the valve opening pressure allows a thrust of the rod 50 that pushes up the valve element 52 to be small, so that the solenoid portion 38 of the first solenoid valve 34 can be made smaller. The thrust of the rod 50 is proportional to the number of turns of the electromagnetic coil 49. It is noted that the solenoid portion 58 of the second solenoid valve 36 can also be made small, similarly to the first solenoid valve 34. The first solenoid valve 34 and the second solenoid valve 36 are designed to reduce the valve opening pressure by combining a large orifice diameter with a small spring force.

Next, the fourth solenoid valve 76 will be described. The control valve 14 has a bypass passage 97 connected to the communication hole 46 of the first solenoid valve 34 and connected to the passage portion 33B, and the fourth solenoid valve 76 disposed in the bypass passage 97. The fourth solenoid valve 76 is a normally open solenoid valve that closes the bypass passage 97 when energized, and always opens the bypass passage 97 when not energized.

As illustrated in FIG. 3B, the fourth solenoid valve 76 includes a valve portion 98 embedded in the lower portion of the control valve 14, and a solenoid portion 99 connected to the valve portion 98 and protruding from the lower portion of the control valve 14. The valve portion 98 includes a valve housing 100 having a tubular shape. A valve chamber 101 is formed in the valve housing 100. A valve hole 102, corresponding to a fourth valve hole, is formed in an upper portion of the valve housing 100, and a communication hole 103 in communication with the bypass passage 97 on the first solenoid valve 34 side is formed in a side portion of the valve housing 100. The valve hole 102 is in communication with the bypass passage 97 on the passage portion 33B side. Similarly to the valve hole 88 of the third solenoid valve 75, a diameter of the valve hole 102 is a smaller than those of the valve hole 44 of the first solenoid valve 34 and the valve hole 64 of the second solenoid valve 36. In the present embodiment, the diameter of the valve hole 102 is the same as that of the valve hole 88, but it does not have to be the same as the diameter of the valve hole 88. The valve chamber 101, the valve hole 102, and the communication hole 103 form a part of the bypass passage 97.

The solenoid portion 99 includes a fixed iron core 104, a movable iron core 105, and an electromagnetic coil 106. A rod insertion hole 108 through which a rod 107 is inserted is formed in the center of the fixed iron core 104. One (lower) end of the rod 107 is connected to the movable iron core 105. The movable iron core 105 is movable in an axial direction of the rod 107. The electromagnetic coil 106 surrounds the fixed iron core 104 and the movable iron core 105. When the electromagnetic coil 106 is energized, the movable iron core 105 approaches the fixed iron core 104, thereby moving the rod 107 upward. A valve element 109 corresponding to a fourth valve element is provided on the other (upper) end of the rod 107. The valve element 109 is capable of closing the valve hole 102. The valve element 109 is a valve element having a conical shape whose outer diameter decreases toward the tip. The rod 107 is provided with a spring receiver 110. In the valve chamber 101, a coil spring 111 corresponding to an urging member is interposed between the spring receiver 110 and the valve housing 100. The coil spring 111 applies an urging force (spring force) to the rod 107 in a direction that urges the rod 107 to open the valve hole 102. The spring force exerted by the coil spring 111 is calculated as the product of the spring constant of the coil spring 111 and the displacement from its natural length.

In the present embodiment, for example, as shown in Table 1, when the diameters of the valve hole 44 of the first solenoid valve 34 and the valve hole 64 of the second solenoid valve 36 are set to 3.0 mm, the installation of the third solenoid valve 75 reduces the hydraulic pressure (braking pressure) acting on the valve element 52 to 0.2 MPa, and the required thrust of the rod 50 becomes 1.4 N. In Comparative Example 1 in which the third solenoid valve 75 is not provided, even though the diameters of the valve holes of the first solenoid valve and the second solenoid valve are 1.1 mm, the hydraulic pressure (braking pressure) received by the valve element is 5.0 MPa, and the required thrust of the rod is 4.7 N. In other words, Comparative Example 1 requires a thrust of 3.36 times or greater than that of the present embodiment. Furthermore, in Comparative Example 2, where the third solenoid valve 75 is not provided and the diameter of the valve hole is set to the same 3.0 mm as in the present embodiment, the thrust required for the rods of the first and second solenoid valves is 35.3 N, which is 25 times or more than that of the present embodiment. Therefore, even if the diameters of the valve hole 44 of the first solenoid valve 34 and the valve hole 64 of the second solenoid valve 36 are, for example, approximately three times the diameter of the valve hole 88 of the third solenoid valve 75, it is possible to reduce the thrust required by the first solenoid valve 34 and the second solenoid valve 36 as shown in Table 1. It is noted that the values of hydraulic pressure (braking pressure) and required thrust in Table 1 may vary slightly depending on measurement errors and measurement conditions. In Table 1, the diameters of the valve holes 44, 64 are set to 2.27 times the diameters of the valve holes in Comparative Example 1. However, the diameters of the valve hole 44 of the first solenoid valve 34 and the valve hole 64 of the second solenoid valve 36 may be 1.5 to 90 times, and is preferably 3 to 15 times, the diameter of the valve hole 88 of the third solenoid valve 75.

**[Table 1]**

| | Unit | Present Embodiment | Comparative Example 1 | Comparative Example 2 |
|---|---|---|---|---|
| Diameter of Valve Hole | mm | 3.0 | 1.1 | 3.0 |
| Fluid Pressure (Braking Pressure) | MPa | 0.2 | 5.0 | 5.0 |
| Required Thrust | N | 1.4 | 4.7 | 35.3 |

In addition, as Another Comparative Example other than Comparative Examples 1 and 2 in Table 1, for example, the diameter of the valve hole common to maintaining hydraulic pressure during braking and releasing hydraulic pressure during braking is set to 1.1 mm, the hydraulic pressure received by the valve element is set to 10 MPa, and the thrust of the rod required to release the hydraulic pressure during braking is set to 9.5 N. In comparison, the diameter of the valve hole 88 of the third solenoid valve 75 of the present embodiment is set to 0.1 to 0.6 mm, so that the diameter of the valve hole 88 becomes 9 to 55% of the diameter of the valve hole of Another Comparative Example. As a result, the thrust of the rod 93 of the third solenoid valve 75 required to release the hydraulic pressure during braking can be reduced to 0.1 to 2.8 N as compared to 9.5 N in Another Comparative Example, which allows the third solenoid valve 75 to be downsized.

In this case, the diameters of the valve hole 44 of the first solenoid valve 34 and the valve hole 64 of the second solenoid valve 36 can be increased to 2.0 to 3.0 mm, and the diameters of the valve holes 44, 64 can be 180 to 270% of the diameters of the valve holes in Another Comparative Example. Since the hydraulic pressure during braking drops from 10 MPa to 0.5 MPa when released by the third solenoid valve 75, the required thrusts of the rods 50, 70 can be reduced to 1.6 to 3.5 N as compared to 9.5 N in Another Comparative Example. In this case, the diameter of the valve hole 102 of the fourth solenoid valve 76 for use in the event of a power failure can be set to 0.6 to 0.8 mm, and the diameter of the valve hole 102 can be set to 55 to 73% of the diameter of the valve hole in Comparative Example 1. The thrust of the rod 107 required to maintain hydraulic pressure during braking can be set to 2.8 to 5.0 N as compared to 9.5 N in Another Comparative Example, and the fourth solenoid valve 76 can be made more compact.

The hydraulic brake system 10 of the present embodiment includes a first hydraulic pressure sensor 112 that detects the hydraulic pressure in the pipe 17. The first hydraulic pressure sensor 112 transmits a signal indicating the detected hydraulic pressure in the pipe 17 to the controller 28. A second hydraulic pressure sensor 113 that detects hydraulic pressure in the pipe 21 is disposed in the pipe 21. The second hydraulic pressure sensor 113 transmits a signal indicating the detected fluid pressure to the controller 28. The controller 28 simultaneously issues an operation command to the actuator 15 and a valve opening command to the second solenoid valve 36. Furthermore, the hydraulic pressure in the pipe 21, detected by the second hydraulic pressure sensor 113, is fed back to the electric motor 22 of the actuator 15. Based on this feedback, the torque of the electric motor 22 is controlled such that the hydraulic pressure in the pipe 21 reaches a target pressure. Instead of the first hydraulic pressure sensor 112, a stroke sensor that detects the amount of depression of the brake pedal 19 and transmits a detection signal to the controller 28 may be provided in the brake pedal 19.

Next, the operation of the hydraulic brake system 10 according to the present embodiment will be described. Firstly, braking during the manual operation of the forklift truck will be described. When the forklift truck is operated manually by an operator, unless the operator operates the brake pedal 19, no braking force is generated in the brake device 13. In the case where braking of the forklift truck is performed during the manual operation, the operator depresses the brake pedal 19, which causes the master cylinder 12 to discharge hydraulic fluid in accordance with the amount of depression, thereby generating the braking force in the brake device 13. Thus, in the case of braking during the manual operation, the first solenoid valve 34 opens the first passage 33 and the second solenoid valve 36 closes the second passage 35.

When the brake pedal 19 is depressed, the hydraulic pressure in the pipe 17 rises to a threshold value or greater. The controller 28 receives a signal indicating the hydraulic pressure in the pipe 17 detected by the first hydraulic pressure sensor 112. Therefore, when the hydraulic pressure in the pipe 17 rises to the threshold value or greater, the controller 28 turns on a brake lamp (not illustrated). Since the first solenoid valve 34 and the second solenoid valve 36 are normally closed solenoid valves, the controller 28 issues a command to the first solenoid valve 34 so that the first solenoid valve 34 is opened. On the other hand, the controller 28 controls the second solenoid valve 36 and the third solenoid valve 75 so that the second solenoid valve 36 and the third solenoid valve 75 are closed. The fourth solenoid valve 76 is a normally open solenoid valve and has the valve hole 102 having a small diameter. Even if the supply of hydraulic fluid to the brake device 13 via the fourth solenoid valve 76 is slow, hydraulic fluid is immediately supplied to the brake device 13 by opening the valve hole 44 by the valve element 52, which has an increased diameter. As a result, a delay in braking by the brake device 13 is prevented.

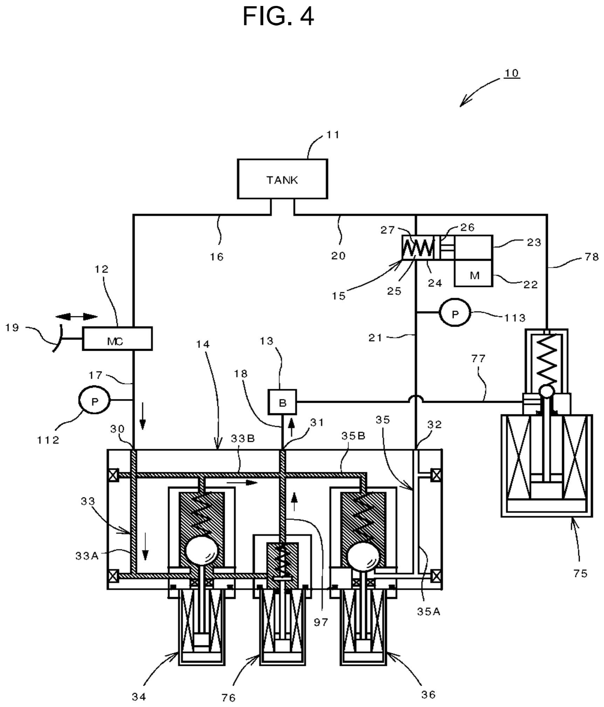

As illustrated in FIG. 4, when the first solenoid valve 34 is opened, the hydraulic fluid discharged from the master cylinder 12 is supplied to the brake device 13 through the pipe 17, the first passage 33, and the pipe 18. In addition, the hydraulic fluid is supplied to the brake device 13 through the bypass passage 97 and the fourth solenoid valve 76. The hatching in FIG. 4 indicates the hydraulic fluid in the control valve 14. In the brake device 13, a braking force is generated by the hydraulic fluid supplied from the master cylinder 12, and the forklift truck receives the braking force of the brake device 13 and slows down or stops. When the hydraulic pressure (braking pressure) of the brake device 13 is to be maintained, the controller 28 controls the first solenoid valve 34 and the fourth solenoid valve 76 so that the first solenoid valve 34 and the fourth solenoid valve 76 are closed.

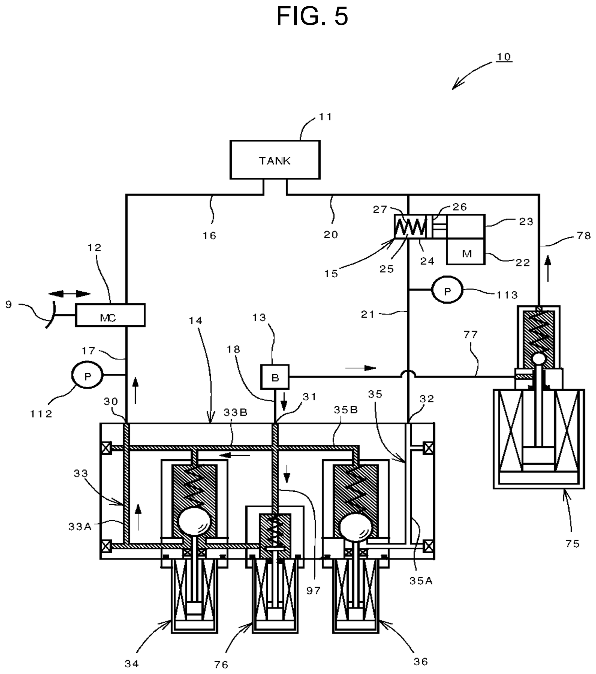

When the brake pedal 19 is released to release the braking pressure of the brake device 13, the controller 28 controls the first solenoid valve 34, the third solenoid valve 75, and the fourth solenoid valve 76 so that the first solenoid valve 34, the third solenoid valve 75, and the fourth solenoid valve 76 are opened, as illustrated in FIG. 5. At this time, by opening the third solenoid valve 75, the hydraulic fluid in the brake device 13 is recovered into the hydraulic fluid tank 11 via the third solenoid valve 75 and the fluid return passage. Accordingly, the hydraulic pressure in the valve chamber 41 acting on the valve element 52 of the first solenoid valve 34 is reduced, so that the force required to open the first solenoid valve 34 is reduced. By opening the first solenoid valve 34, the hydraulic fluid returns to the master cylinder 12 through the first solenoid valve 34 and the master cylinder fluid passage, and excess hydraulic fluid is recovered from the master cylinder 12 into the hydraulic fluid tank 11. Furthermore, by opening the fourth solenoid valve 76, the hydraulic fluid flows toward the master cylinder 12 through the bypass passage 97. In this way, when the braking pressure of the brake device 13 is released, the hydraulic fluid in the brake device 13 is promptly recovered into the hydraulic fluid tank 11, thereby providing high responsiveness in releasing the braking pressure.

Next, braking during the automated operation of the forklift truck will be described. When the forklift truck is traveling in the automated operation, unless the actuator 15 is not operated, no braking force is generated in the brake device 13. In the case where braking of the forklift truck is performed during the automated operation, the actuator 15 is activated so as to discharge hydraulic fluid in accordance with the amount of operation of the actuator 15, thereby generating braking force in the brake device 13. Thus, in the case of braking during the automated operation, the second solenoid valve 36 opens the second passage 35, the first solenoid valve 34 closes the first passage 33, and the fourth solenoid valve 76 closes the bypass passage 97.

When braking of the forklift truck is performed during the automated operation, the controller 28 issues a drive command to the actuator 15 as well as a valve opening command to the second solenoid valve 36 and a valve closing command to the fourth solenoid valve 76. When the actuator 15 is activated, the controller 28 receives a signal indicating the hydraulic pressure in the pipe 21 detected by the second hydraulic pressure sensor 113. The controller 28 feeds back the hydraulic pressure in the pipe 21, detected by the second hydraulic pressure sensor 113, to the electric motor 22 of the actuator 15 to control the torque of the electric motor 22 such that the hydraulic pressure in the pipe 21 reaches a target pressure. The controller 28 keeps the first solenoid valve 34 closed, and energizes the fourth solenoid valve 76 and the second solenoid valve 36 so that the fourth solenoid valve 76 is closed and the second solenoid valve 36 is opened.

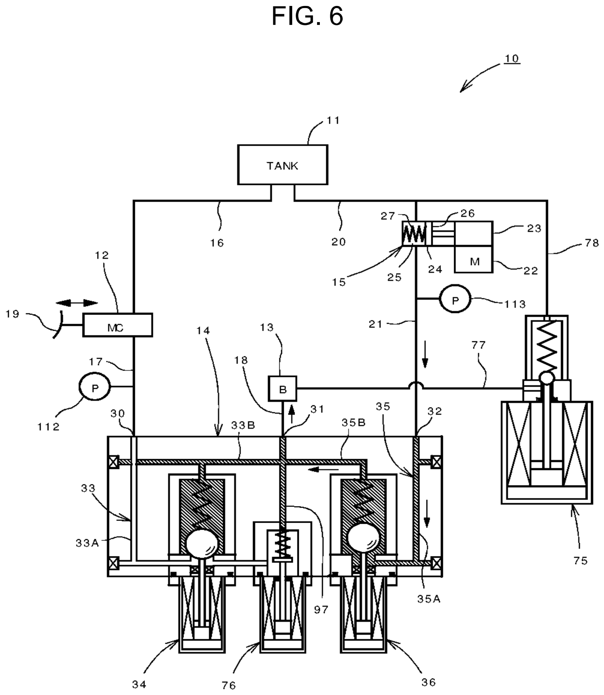

As illustrated in FIG. 6, when the second solenoid valve 36 is opened and the fourth solenoid valve 76 is closed, the hydraulic fluid discharged from the actuator 15 is supplied to the brake device 13 through the pipe 21, the second passage 35, and the pipe 21. By opening the valve hole 64 by the valve element 72 having an increased diameter, the hydraulic fluid is immediately supplied to the brake device 13. As a result, a delay in braking by the brake device 13 is prevented. The hatching in FIG. 6 indicates the hydraulic fluid in the control valve 14. In the brake device 13, a braking force is generated by the hydraulic fluid supplied from the actuator 15, and the forklift truck receives the braking force of the brake device 13 and slows down or stops. When the braking pressure of the brake device 13 is to be maintained, the controller 28 controls the second solenoid valve 36 so that the second solenoid valve 36 is closed.

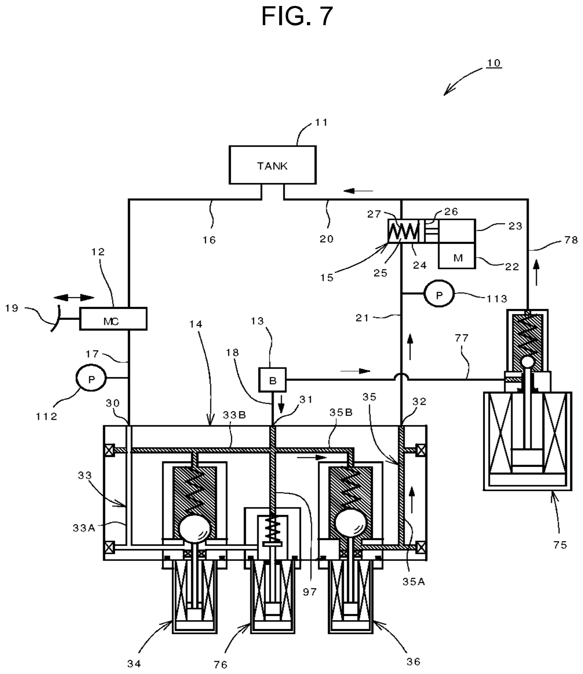

When the braking pressure of the brake device 13, which is being maintained, is to be released, the controller 28 controls the second solenoid valve 36 and the third solenoid valve 75 so that the second solenoid valve 36 and the third solenoid valve 75 are opened, as illustrated in FIG. 7. At this time, by opening the third solenoid valve 75, the hydraulic fluid in the brake device 13 is recovered into the hydraulic fluid tank 11 via the third solenoid valve 75 and the fluid return passage. Accordingly, the hydraulic pressure in the valve chamber 61 acting on the valve element 72 of the second solenoid valve 36 is reduced, so that the force required to open the second solenoid valve 36 is reduced. When the second solenoid valve 36 is opened, the hydraulic fluid returns to the actuator 15 through the second solenoid valve 36 and the actuator fluid passage, and excess hydraulic fluid is recovered from the actuator 15 into the hydraulic fluid tank 11. In this way, when the braking pressure of the brake device 13 is released, the hydraulic fluid in the brake device 13 is promptly recovered into the hydraulic fluid tank 11, thereby providing high responsiveness in releasing the braking pressure. The hatching in FIG. 7 indicates the hydraulic fluid in the control valve 14.

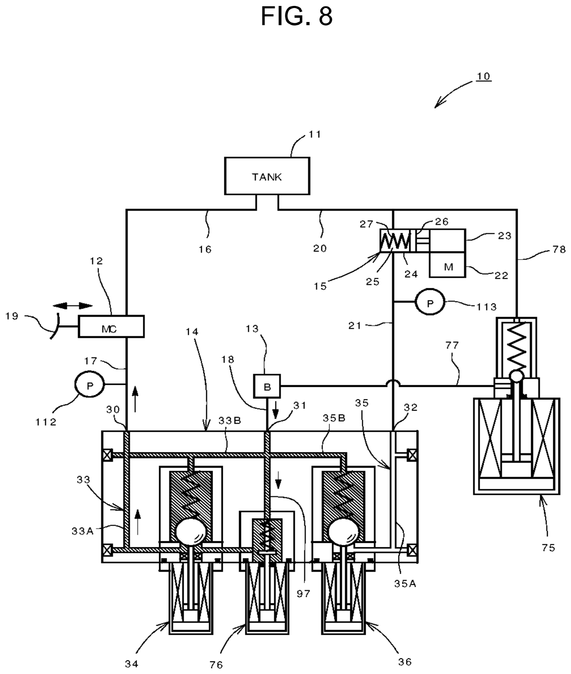

Incidentally, in the hydraulic brake system 10, even if a power failure occurs in a state where the braking pressure of the brake device 13 is being maintained, the braking pressure can be released. For example, after the breaking pressure of the brake device 13 is generated by the master cylinder 12, the first solenoid valve 34 and the fourth solenoid valve 76 are closed to maintain the breaking pressure of the brake device 13. If a power failure occurs in this state, the first solenoid valve 34 and the third solenoid valve 75 cannot be opened, but the fourth solenoid valve 76 is de-energized and opened. As illustrated in FIG. 8, when the fourth solenoid valve 76 is opened, the hydraulic fluid of the brake device 13 returns to the master cylinder 12 through the bypass passage 97, the fourth solenoid valve 76, and the pipe 17, and excess hydraulic fluid is recovered from the master cylinder 12 into the hydraulic fluid tank 11.

On the other hand, even if a power failure occurs in a state where the braking pressure of the brake device 13 is maintained by closing the second solenoid valve 36 and the fourth solenoid valve 76 after the braking pressure of the brake device 13 is generated by the actuator 15, the fourth solenoid valve 76 is de-energized and opened. As illustrated in FIG. 8, when the fourth solenoid valve 76 is opened, the hydraulic fluid of the brake device 13 returns to the master cylinder 12 through the bypass passage 97, the fourth solenoid valve 76, and the pipe 17, and excess hydraulic fluid is recovered from the master cylinder 12 into the hydraulic fluid tank 11. The hatching in FIG. 8 indicates the hydraulic fluid in the control valve 14.

The hydraulic brake system 10 of the present embodiment offers the following effects.
(1) The hydraulic brake system 10 includes the third solenoid valve 75 that is provided independently from the control valve 14 and opens and closes the fluid return passage. When the hydraulic pressure of the brake device 13 is released, the fluid return passage is opened by the third solenoid valve 75. Therefore, the force required to open the first solenoid valve 34 to return the hydraulic fluid to the hydraulic fluid tank 11 through the master cylinder 12 can be reduced, and the force required to open the second solenoid valve 36 to return hydraulic fluid to the hydraulic fluid tank 11 through the actuator 15 can be reduced. As a result, even if the diameters of the valve holes 44, 64 of the first solenoid valve 34 and the second solenoid valve 36 are increased, the forces required to open the valve holes 44, 64 of the first solenoid valve 34 and the second solenoid valve 36 can be reduced, and the sizes of the first solenoid valve 34 and the second solenoid valve 36 can be reduced. In addition, when the hydraulic pressure of the brake device 13 is to be released, the third solenoid valve 75 opens the fluid return passage. In combination with the hydraulic fluid returning from the brake device 13 through the control valve 14 to the hydraulic fluid tank 11, the hydraulic fluid can be quickly returned to the hydraulic fluid tank 11 through the fluid return passage. That is, the responsiveness of the brake device 13 can be improved by increasing the diameters of the valve holes 44, 64 of the first solenoid valve 34 and the second solenoid valve 36, and the control valve 14 can be downsized.
(2) The fourth solenoid valve 76 opens and closes the bypass passage 97, which bypasses the first solenoid valve 34 in the master cylinder fluid passage. The controller 28 controls the fourth solenoid valve 76 so that the bypass passage 97 is closed in braking during the automated operation. Even if the first solenoid valve 34, the second solenoid valve 36, and the third solenoid valve 75 are unable to be opened due to a malfunction or the like when braking by the brake device 13 is performed, hydraulic fluid can flow through the fourth solenoid valve 76 to the master cylinder 12, thereby releasing the hydraulic pressure (braking pressure) of the brake device 13.
(3) The fourth solenoid valve 76 is a normally open solenoid valve. Even if a power failure occurs during braking by the brake device 13 and the first solenoid valve 34, the second solenoid valve 36, and the third solenoid valve 75 become unable to be opened, the fourth solenoid valve 76 is opened. Therefore, the hydraulic fluid can flow through the fourth solenoid valve 76 toward the master cylinder 12, and the braking pressure of the brake device 13 can be released.
(4) The first solenoid valve 34 has the valve hole 44, and the valve element 52 that opens and closes the valve hole 44, and the second solenoid valve 36 has the valve hole 64, and the valve element 72 that opens and closes the valve hole 64. The third solenoid valve 75 has the valve hole 88, and the valve element 95 that opens and closes the valve hole 88 . The diameters of the valve holes 44, 64 are larger than that of the valve hole 88. Therefore, when the first solenoid valve 34 and the second solenoid valve 36 are opened, the first solenoid valve 34 and the second solenoid valve 36 allows a greater amount of hydraulic fluid to flow, as compared to the third solenoid valve 75.
(5) Since the diameters of the valve holes 44, 64 are 1.5 to 90 times larger than that of the valve hole 88, the first solenoid valve 34 and the second solenoid valve 36 allow a larger amount of hydraulic fluid to flow when the first solenoid valve 34 or the second solenoid valve 36 is opened, as compared to the third solenoid valve 75. The diameters of the valve holes 44, 64 are preferably 3 to 15 times the diameter of the valve hole 88. In this case, practical advantages, such as improved manufacturability of each of the solenoid valves, become significant.
(6) Simply increasing the diameter of the valve hole of the first solenoid valve 34 allows the flow rate of hydraulic fluid to be increased, but the hydraulic pressure that the valve element 52 receives from the brake device 13 increases. As a result, the force required to push up the valve element 52 increases, resulting in a problem in which upsizing of the solenoid portion 38 becomes unavoidable. On the other hand, it is possible to reduce the size of the solenoid portion 38 by reducing the diameter of the valve hole 44 of the first solenoid valve 34, but in this case, the flow rate of the hydraulic fluid is reduced due to the reduced diameter of the valve hole 44. As a result, a delay in supplying of hydraulic fluid to the brake device 13 occurs, resulting in a problem in which the responsiveness of the brake device 13 is reduced. However, in the present embodiment, since the third solenoid valve 75 is provided, even if the valve hole 44 of the first solenoid valve 34 is made larger, the force required to open the valve hole 44 can be reduced. As a result, the thrust of the rod 50 that pushes up the valve element 52 can be made smaller relative to the size of the valve hole 44, and the solenoid portion 38 of the first solenoid valve 34 can be downsized. Similarly to the first solenoid valve 34, the solenoid portion 58 of the second solenoid valve 36 can also be downsized. Therefore, when braking starts, the valve hole 44 (64) is immediately opened, hydraulic fluid is quickly supplied to the brake device 13, and the hydraulic pressure required to start braking is secured. Furthermore, adjustment of the hydraulic pressure of the brake device 13 can be achieved by maintaining the energization of the first solenoid valve 34 (the second solenoid valve 36). In returning the hydraulic fluid of the brake device 13 to the master cylinder 12, the valve hole 102 of the fourth solenoid valve 76 having a small diameter causes the hydraulic fluid to return slowly. However, by releasing the hydraulic pressure of the brake device 13 through the third solenoid valve 75, the valve hole 44 (or 64) having a large diameter is opened, which allows the hydraulic fluid to be returned to the master cylinder 12 promptly.

### Modification

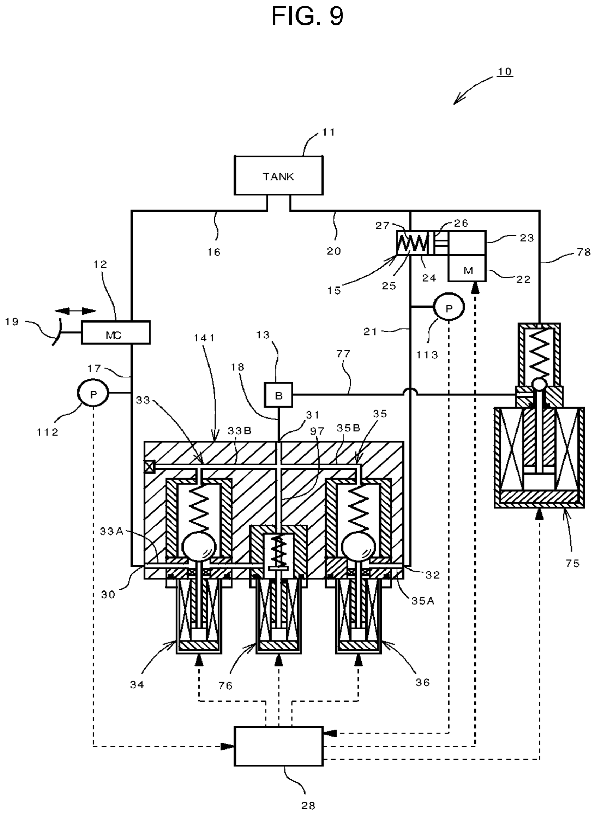

Next, a control valve 141 according to a modification will be described. In the modification illustrated in FIG. 9, a master cylinder port 30 and an actuator port 32 in the control valve 141 are provided on a side portion of the control valve 141 instead of in the upper portion thereof. The configuration of the modification provides the same effects as those of the embodiment. Furthermore, by providing the master cylinder port 30 and the actuator port 32 on the side portion of the control valve 141, the number of passages in the control valve 141 can be reduced, and the control valve 141 may be downsized.

The present invention is not limited to the above-described embodiment, but may be modified in various manners within the gist of the present invention, as exemplified below.

Although the above-described embodiment (including the modification) has the fourth solenoid valve and the bypass passage, the configuration is not limited to this. For example, the hydraulic brake system does not have to include the fourth solenoid valve and the bypass passage. In this case, by increasing the diameter of the valve holes of the first solenoid valve and the second solenoid valve, the responsiveness of the brake device can be improved, and the control valve can be downsized.

Although the fourth solenoid valve is a normally open solenoid valve in the above-described embodiment (including the modification), the configuration is not limited to this. The fourth solenoid valve may be, for example, a normally closed solenoid valve. In this case, the third solenoid valve only needs to be energized to be opened when hydraulic fluid from the brake device is returned to the master cylinder.

In the above-described embodiment (including the modification), the third solenoid valve is provided independently of the control valve, but the configuration is not limited to this. For example, the third solenoid valve may be provided in the control valve. In this case as well, the first solenoid valve and the second solenoid valve can be downsized.

In the above-described embodiment (including the modification), when the hydraulic pressure (braking pressure) of the brake device is released, opening of the first solenoid valve or the second solenoid valve and opening of the third solenoid valve are performed simultaneously, but the configuration is not limited to this. For example, the third solenoid valve may be opened first, and then the first solenoid valve or the second solenoid valve may be opened with a slight delay.

In the above-described embodiment (including the modification), as the actuator, an electric hydraulic cylinder using an electric motor as a drive source has been described, but the configuration is not limited to this. The actuator may be of any type or shape as long as it is capable of generating hydraulic pressure for the brake device.

In the above-described embodiment (including the modification), the hydraulic brake system for the forklift truck as an industrial vehicle has been described, but the application of the present invention is not limited to this. The industrial vehicle may be, for example, a towing vehicle or a towing tractor, or only needs to be any vehicle equipped with a brake device that can be operated with hydraulic pressure of the master cylinder and the actuator.

## Claims

1. A hydraulic brake system (10) for an industrial vehicle, the hydraulic brake system (10) comprising:
a brake device (13) configured to brake a wheel using hydraulic pressure;
a master cylinder (12) having a brake pedal, and configured to discharge hydraulic fluid in accordance with a depressed amount of the brake pedal to output the hydraulic pressure; and
a master cylinder fluid passage connecting the master cylinder (12) and the brake device (13), **characterized in that**
the hydraulic brake system (10) further includes:
a hydraulic fluid tank (12) in which the hydraulic fluid is stored;
a control valve (14, 141) disposed in the master cylinder fluid passage;
an actuator (15) that outputs the hydraulic pressure;
an actuator fluid passage that extends from the actuator (15) to the master cylinder fluid passage through the control valve (14, 141);
a fluid return passage allowing the hydraulic fluid to return from the brake device (13) to the hydraulic fluid tank (12);
a first solenoid valve (34) provided in the control valve (14, 141), and configured to open and close the master cylinder fluid passage;
a second solenoid valve (36) provided in the control valve (14, 141), and configured to open and close the actuator fluid passage;
a third solenoid valve (75) configured to open and close the fluid return passage; and
a controller (28) configured to control the first solenoid valve (34), the second solenoid valve (36), and the third solenoid valve (75),
the hydraulic fluid tank (12) is connected to the master cylinder fluid passage and the actuator fluid passage,
when braking is performed by the master cylinder (12), the controller (28) controls the first solenoid valve (34) to open the master cylinder fluid passage, and the second solenoid valve (36) to close the actuator fluid passage,
when braking is performed by the actuator (15), the controller (28) controls the second solenoid valve (36) to open the actuator fluid passage, and the first solenoid valve (34) to close the master cylinder fluid passage, and
when the hydraulic pressure of the brake device (13) is to be released, the controller (28) controls the third solenoid valve (75) to open the fluid return passage.

2. The hydraulic brake system (10) for the industrial vehicle according to claim 1, further comprising:
a bypass passage (97) provided in the control valve (14, 141), and bypassing the first solenoid valve (34) in the master cylinder fluid passage; and
a fourth solenoid valve (76) disposed in the control valve (14, 141), and configured to be controlled by the controller (28) to open and close the bypass passage (97), **characterized in that**
the controller (28) controls the fourth solenoid valve (76) to close the bypass passage (97) when braking is performed by the actuator (15).

3. The hydraulic brake system (10) for the industrial vehicle according to claim 2, **characterized in that**
the fourth solenoid valve (76) is a normally open solenoid valve.

4. The hydraulic brake system (10) for the industrial vehicle according to claim 1 or 2, **characterized in that**
the first solenoid valve (34) has a first valve hole (44), and a first valve element (52) that opens and closes the first valve hole (44),
the second solenoid valve (36) has a second valve hole (64), and a second valve element (72) that opens and closes the second valve hole (64),
the third solenoid valve (75) has a third valve hole (88), and a third valve element (95) that opens and closes the third valve hole (88);
a diameter of each of the first valve hole (44) and the second valve hole (64) is larger than a diameter of the third valve hole (88).

5. The hydraulic brake system (10) for the industrial vehicle according to claim 4, **characterized in that**
the diameter of each of the first valve hole (44) and the second valve hole (64) is 1.5 to 90 times the diameter of the third valve hole (88).
